# FASCICULE DE BREVET EUROPEEN

(11) **EP 4 436 859 B1**
(45) Date de publication et mention de la délivrance du brevet: **03.12.2025**
(21) Numéro de dépôt: 22813658.6
(22) Date de dépôt: 26.10.2022
(51) Int. Cl.: B62D 7/15, B66F 9/075, B66F 9/22

(54) **ENGIN AUTOMOTEUR, NOTAMMENT UN ENGIN AUTOMOTEUR DE MANUTENTION DE CHARGE**
SELBSTFAHRENDES FAHRZEUG, INSBESONDERE SELBSTFAHRENDES LASTHANDHABUNGSFAHRZEUG
SELF-PROPELLED VEHICLE, IN PARTICULAR SELF-PROPELLED LOAD-HANDLING VEHICLE

(30) Priorité: 23.11.2021 FR 2112369
(43) Date de publication de la demande: 02.10.2024
(73) Titulaire: MANITOU BF, 44150 Ancenis (FR)
(72) Inventeur: VINCONNEAU, Maxime, 44150 ANCENIS (FR)
(74) Mandataire: Ipsilon
(86) Numéro de dépôt international: PCT/FR2022/052035
(87) Numéro de publication internationale: WO 2023/094743

(56) Documents cités:
- FR-A5- 2 208 370
- US-A1- 2008 001 380

## Description

La présente invention concerne un engin automoteur, notamment un engin automoteur de manutention de charge.

Elle concerne en particulier un engin automoteur comprenant un essieu moto-directeur avec deux roues avant et un essieu moto-directeur arrière avec deux roues arrière, chaque essieu étant équipé d'un mécanisme de direction, chaque mécanisme de direction comprenant un vérin double effet raccordable à une source de fluide sous pression, ledit vérin comprenant un corps allongé depuis une extrémité en direction de l'autre extrémité dudit corps et deux pistons, associés chacun à une tige de sortie de commande directionnelle d'une roue de l'essieu, lesdits pistons divisant le corps en une chambre centrale s'étendant entre les pistons et deux chambres d'extrémité disposées chacune côté tige, ledit engin comprenant deux configurations et un sélecteur manuel de l'une ou l'autre configurations, la première configuration dite normale correspondant à une configuration dans laquelle les roues d'un même essieu s'étendent dans des plans sensiblement parallèles, la deuxième configuration dite en « O » correspondant à une configuration dans laquelle les roues du véhicule sont disposées sur un cercle de centre passant par un axe dit vertical, pour une rotation de l'engin sur lui-même autour dudit axe, la chambre centrale de chaque vérin étant à l'état non alimenté en fluide dans la première configuration de sorte que dans cette première configuration, le vérin de chaque mécanisme de direction forme l'équivalent d'un vérin à un piston et deux tiges, la chambre centrale étant dans la deuxième configuration, apte à être alimentée en fluide.

Un engin automoteur équipé d'un tel dispositif de direction est connu comme l'illustre le brevet EP 2 570 331. Le brevet US 2008/001380 décrit également un engin automoteur avec une configuration en « O ». Pour permettre un fonctionnement optimal d'une telle direction, il est nécessaire de maitriser parfaitement les positions de fin de course des vérins des mécanismes de transmission sans quoi les roues ne sont pas nécessairement parallèles dans la première configuration.

Un but de l'invention est de proposer un engin automoteur du type précité dont la conception permet de définir les positions de fin de course des vérins avec précision.

Un autre but de l'invention est de proposer un engin automoteur du type précité dont la conception permet une résistance mécanique accrue des mécanismes de direction.

A cet effet, l'invention a pour objet un engin automoteur, notamment un engin automoteur de manutention de charge, ledit engin comprenant un essieu moto-directeur avant avec deux roues avant et un essieu moto-directeur arrière avec deux roues arrière, chaque essieu étant équipé d'un mécanisme de direction, chaque mécanisme de direction comprenant un vérin hydraulique double effet raccordable à une source de fluide sous pression, ledit vérin comprenant un corps allongé depuis une extrémité en direction de l'autre extrémité dudit corps et deux pistons, associés chacun à une tige de sortie de commande directionnelle d'une roue de l'essieu, lesdits pistons divisant le corps en une chambre dite centrale s'étendant entre les pistons et deux chambres d'extrémité disposées chacune côté tige, ledit engin comprenant deux configurations et un sélecteur de l'une ou l'autre configurations, la première configuration dite normale correspondant à une configuration dans laquelle les roues d'un même essieu s'étendent dans des plans sensiblement parallèles, la deuxième configuration dite en « O » correspondant à une configuration dans laquelle les roues de l'engin sont disposées sur un cercle de centre passant par un axe dit vertical, pour une rotation de l'engin sur lui-même autour dudit axe, la chambre centrale de chaque vérin étant à l'état non alimenté en fluide dans la première configuration de sorte que dans cette première configuration, le vérin de chaque mécanisme de direction forme l'équivalent d'un vérin à un piston et deux tiges, la chambre centrale étant dans la deuxième configuration, apte à être alimentée en fluide, caractérisé en ce que l'engin comprend pour un raccordement en fluide des vérins des mécanismes de direction à la ou les sources de fluide sous pression, un premier et un deuxième circuits de fluide, le premier circuit de fluide étant un circuit actif dans la première configuration, le deuxième circuit de fluide étant un circuit actif dans la deuxième configuration, le deuxième circuit de fluide étant, pour le vérin de chaque mécanisme de direction, configuré de sorte que lorsque la chambre centrale dudit vérin forme une chambre d'admission, les chambres d'extrémité dudit vérin forment des chambres d'échappement, et inversement, ce deuxième circuit de fluide étant équipé d'un diviseur de débit pour permettre une alimentation à un même débit de fluide de chaque chambre d'extrémité. Le fait que le deuxième circuit soit équipé d'un diviseur de débit permet d'assurer un retour des pistons dans la zone médiane du corps du vérin, la zone médiane dudit corps étant prise par référence aux deux extrémités dudit corps.

Selon un mode de réalisation de l'invention, le diviseur de débit du deuxième circuit de fluide, qui est de préférence un diviseur de débit à engrenages, est interposé entre la source de pression du deuxième circuit de fluide et les chambres d'extrémité des vérins.

Selon un mode de réalisation de l'invention, le deuxième circuit comprend une première portion de circuit entre la source de fluide sous pression du deuxième circuit et la chambre centrale de chaque vérin et une deuxième portion de circuit s'étendant entre la source de fluide sous pression du deuxième circuit et chaque chambre d'extrémité de chaque vérin, la première portion de circuit se développe depuis la source de fluide sous pression du deuxième circuit vers un nœud de raccordement au niveau duquel ladite première portion de circuit se divise en deux tronçons reliant l'un le nœud de raccordement à la chambre centrale de l'un des vérins l'autre le nœud de raccordement à la chambre centrale de l'autre vérin, et la deuxième portion de circuit se divise au niveau du diviseur de débit en quatre tronçons reliant chacun le diviseur de débit à une chambre d'extrémité d'un vérin distincte d'un tronçon à un autre.

Selon un mode de réalisation de l'invention, le deuxième circuit de fluide est équipé d'un distributeur à au moins trois positions interposé entre la source de fluide sous pression du deuxième circuit de fluide et les vérins, la première position du distributeur dans laquelle aucune chambre des vérins n'est alimentée par ledit deuxième circuit de fluide correspond à l'état positionné du sélecteur sur la première configuration, la deuxième position du distributeur dans laquelle la chambre centrale de chaque vérin est une chambre d'alimentation en fluide et les chambres d'extrémité sont des chambres d'échappement correspond au moins à l'état positionné du sélecteur sur la deuxième configuration, et la troisième position du distributeur dans laquelle la chambre centrale est une chambre d'échappement et les chambres d'extrémité sont des chambres d'alimentation en fluide correspond à l'état entraîné en déplacement du sélecteur pour le passage de la deuxième à la première configuration.

Selon un mode de réalisation de l'invention, les premier et deuxième circuits de fluide comprennent chacun au moins une portion de circuit individuelle et une portion de circuit commune avec l'autre circuit, la ou au moins l'une des portions communes aux premier et deuxième circuits est disposée entre l'une des chambres d'extrémité d'un vérin et un nœud de liaison muni d'un organe de commutation, ledit organe de commutation est monté mobile entre une première position dans laquelle la portion commune est en communication fluidique avec une portion individuelle du premier circuit et une deuxième position dans laquelle la portion commune est en communication fluidique avec une portion individuelle du deuxième circuit et la première position de l'organe de commutation correspond à l'état positionné du sélecteur sur la première configuration, et la deuxième position de l'organe de commutation à l'état positionné du sélecteur sur la deuxième configuration.

Selon un mode de réalisation de l'invention, l'engin comprend une unité de commande du ou de chaque organe de commutation, ladite unité de commande étant configurée pour acquérir des données de position du sélecteur et pour commander les organes de commutation en fonction desdites données. Il en résulte une simplicité de construction.

Selon un mode de réalisation de l'invention, le corps de chaque vérin comprend, pour une alimentation en fluide de la chambre centrale dudit vérin, une ouverture ménagée dans la zone médiane dudit corps prise par référence aux deux extrémités dudit corps.

Selon un mode de réalisation de l'invention, au moins une partie de l'ouverture ménagée dans la zone médiane du corps de chaque vérin prise par référence aux deux extrémités dudit corps s'étend à équidistance des extrémités dudit corps. Cette conception permet une augmentation de la résistance mécanique du vérin.

Selon un mode de réalisation de l'invention, dans la première configuration, les pistons d'un même vérin sont solidaires en déplacement par simple contact d'appui l'un contre l'autre. Il en résulte une construction simplifiée.

Selon un mode de réalisation de l'invention, l'engin comprend un premier dispositif de détection d'au moins un paramètre représentatif de la position dite droite des roues avant et un deuxième dispositif de détection d'au moins un paramètre représentatif de la position dite droite des roues arrière, la position droite des roues avant ou respectivement arrière correspond à une position dans laquelle les roues avant ou respectivement arrière sont parallèles entre elles et à l'axe longitudinal de l'engin pris suivant la direction avant/arrière de l'engin, et l'engin comprend une unité de commande configurée pour autoriser l'actionnement du sélecteur et son passage de la position correspondant à la première configuration à la position correspondant à la deuxième configuration uniquement en position droite des roues avant et arrière.

La présence des premier et deuxième dispositifs de détection permet de garantir un passage de la première à la deuxième configuration en position droite des roues pour éviter un positionnement imparfait en « O » des roues en deuxième configuration.

### Brève description des dessins

L'invention sera bien comprise à la lecture de la description suivante d'exemples de réalisation, en référence aux dessins annexés dans lesquels :
[Fig. 1] représente une vue de côté d'un engin conforme à l'invention ;

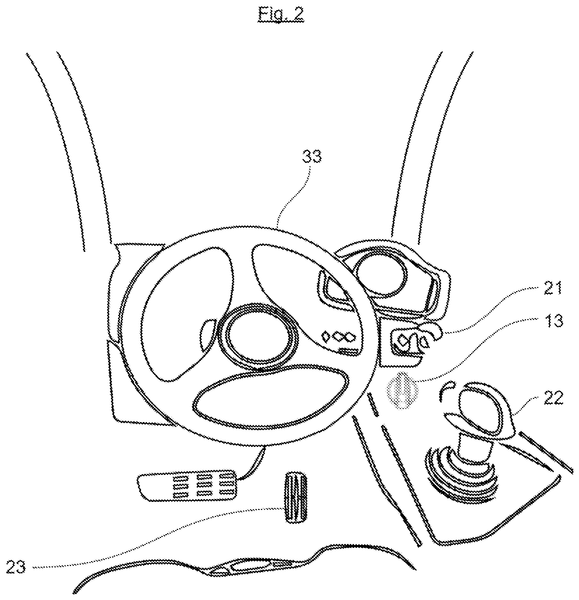

[Fig. 2] représente une vue schématique partielle de l'intérieur du poste de pilotage de l'engin ;
[Fig. 3] représente une vue schématique de dessus des circuits hydrauliques en lien avec les essieux moto-directeurs dans la première configuration de l'engin ;
[Fig. 4] représente une vue schématique de dessus des circuits hydrauliques en lien avec les essieux moto-directeurs dans la deuxième configuration de l'engin ;
[Fig. 5] représente une vue schématique de dessus des circuits hydrauliques en lien avec les essieux moto-directeurs au cours du passage de la deuxième configuration à la première configuration de l'engin ;
[Fig. 6A] représente une vue schématique d'un vérin en position extrême de braquage des roues du pont avant à droite dans la première configuration de l'engin ;
[Fig. 6B] représente une vue schématique d'un vérin en position extrême de braquage des roues du pont avant à gauche dans la première configuration de l'engin ;
[Fig. 7A] représente une vue schématique d'un vérin en position de pincement ou d'ouverture des roues dans la deuxième configuration de l'engin ;
[Fig. 7B] représente une vue schématique d'un vérin en position de pincement ou d'ouverture des roues dans la deuxième configuration de l'engin.

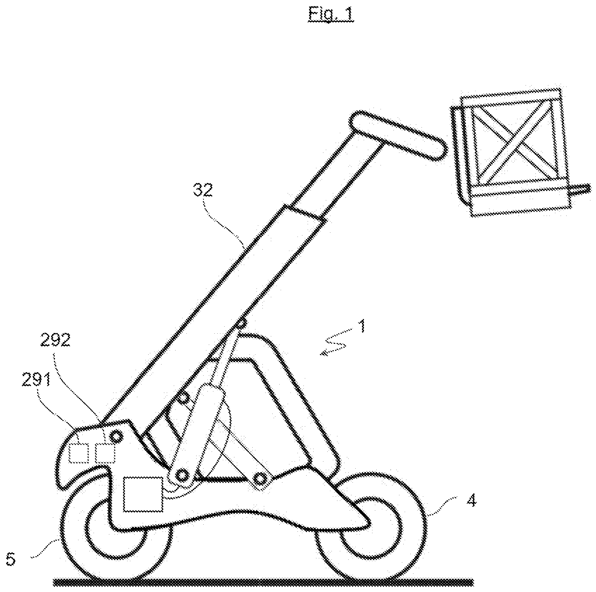

Comme mentionné ci-dessus, l'invention a pour objet un engin 1 automoteur qui peut être du type de celui représenté à la figure 1. La figure 1 représente un engin 1 automoteur de manutention de charge.

Cet engin 1 comprend un châssis roulant équipé d'une cabine de pilotage et portant un bras de levage de charge 32 monté à pivotement autour d'un axe horizontal sur le châssis.

Cet engin 1 comprend, au niveau du châssis roulant de l'engin 1, un essieu 2 moto-directeur avant avec deux roues 4 avant et un essieu 3 moto-directeur arrière avec deux roues 5 arrières.

Chaque essieu 2 ou 3 moto-directeur peut être équipé, pour l'entraînement en rotation des roues, d'un différentiel. L'entraînement de chaque essieu moto-directeur est assuré par l'intermédiaire d'un arbre d'entrée. Cet arbre d'entrée est relié de manière en soi connue à une sortie de boîte de vitesse.

L'entraînement en rotation des roues d'un même essieu peut s'opérer avec une même vitesse de rotation dans un même sens de rotation ou suivant deux sens de rotation opposés. Pour un tel entraînement en rotation en sens inverse des roues, le différentiel peut être un différentiel inverseur ou une motorisation auxiliaire peut être prévue.

Chaque essieu 2 ou 3 est donc configuré pour permettre l'entraînement en rotation des roues dudit essieu suivant un même sens de rotation et suivant un sens de rotation opposé. Cet entraînement en rotation des roues, dans un même sens ou dans un sens opposé, en fonction du mode de fonctionnement et en particulier, de la configuration prise par l'engin, ne sera pas décrit plus en détail ci-après car il est bien connu à ceux versés dans cet art.

Chaque essieu 2 ou 3 moto-directeur est, par ailleurs, équipé d'un mécanisme 6 de direction. Chaque mécanisme 6 de direction comprend un vérin 7 hydraulique double effet raccordable à au moins une source de fluide sous pression.

Dans les exemples représentés, deux sources de fluide, respectivement mentionnées en 17 et 18 sont prévues et seront décrites plus en détail ci-après.

Le vérin 7 de chaque mécanisme 6 de direction comprend un corps 8 allongé depuis une extrémité en direction de l'autre extrémité dudit corps 8 et deux pistons 91 et 92 associés chacun à une tige de sortie de commande directionnelle d'une roue de l'essieu. Les pistons 91 et 92 divisent le corps 8 en une chambre 11 dite centrale s'étendant entre les pistons 91 et 92, et deux chambres 121, 122 d'extrémité disposées chacune côté tige. La tige 101 est associée au piston 91, tandis que la tige 102 est associée au piston 92.

Chaque tige 101 ou 102 de sortie du vérin 7 est couplée au niveau de l'essieu à une roue de l'essieu pour une orientation de la roue par rotation de la roue 4 avant ou 5 arrière autour d'un axe transversal à l'axe de rotation de la roue sous l'action de ladite tige de sortie. Chaque tige 101 ou 102 de sortie est ainsi, de manière en soi connue, reliée à un pivot de roue par une biellette de direction. Le déplacement de la tige du vérin est transmis par la biellette à l'axe pivot de la roue pour une rotation de la roue autour d'un axe vertical à l'état positionné de l'engin sur une surface plane horizontale.

En pratique, en position de sortie des deux tiges 101 et 102 des pistons 91 et 92 du vérin 7 équipant l'essieu 2 moto-directeur avant, les roues 4 avant occupent une position de pincement, c'est-à-dire convergent et pointent vers l'intérieur de l'engin en formant un angle rentrant par rapport à l'axe longitudinal de l'engin pris suivant la direction avant/arrière. En position de sortie des deux tiges 101 et 102 des pistons 91 et 92 du vérin 7 équipant l'essieu 3 moto-directeur arrière, les roues 5 arrières occupent une position d'ouverture, c'est-à-dire convergent et pointent vers l'extérieur de l'engin en formant un angle sortant par rapport à l'axe longitudinal de l'engin pris suivant la direction avant/arrière.

L'engin 1 comprend deux configurations et un sélecteur 13 ou commande à actionnement manuel de l'une ou l'autre des configurations. Ce sélecteur 13 peut prendre un grand nombre de formes. Il peut, dans sa version la plus simple, être formé par un simple bouton disposé dans la cabine de pilotage et actionnable par l'opérateur pour le passage d'une configuration à une autre. Dans l'exemple représenté, le sélecteur 13 est un bouton à deux positions.

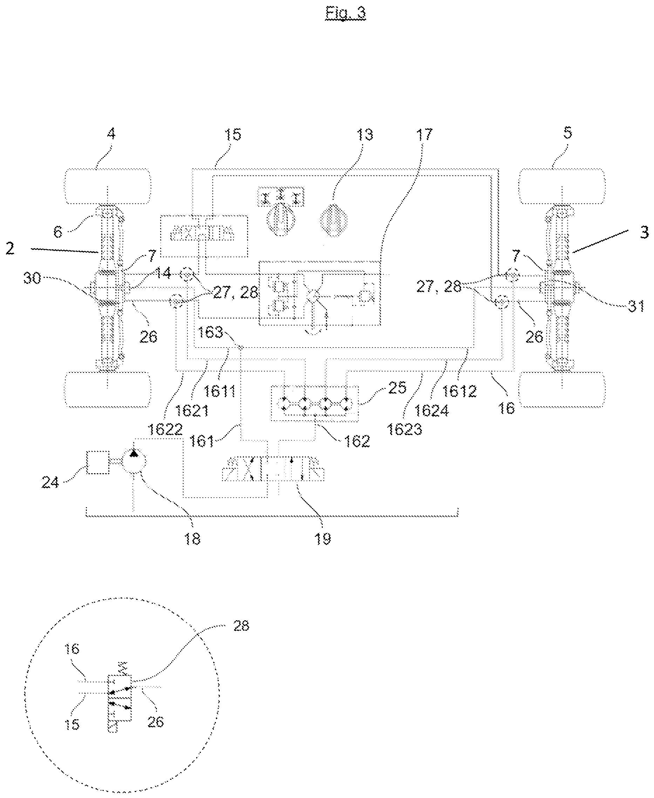

Les roues d'un même essieu s'étendent dans des plans sensiblement parallèles, c'est-à-dire parallèles à ± 20° près dans la première configuration comme illustré à la figure 3. Les roues d'un même essieu sont destinées à tourner dans le même sens dans la première configuration.

Dans la deuxième configuration, les roues d'un même essieu sont disposées sur un cercle C de centre passant par un axe A dit vertical pour permettre une rotation de l'engin 1 sur lui-même autour dudit axe A à l'état positionné de l'engin 1 sur une surface plane horizontale, et à l'état entraîné en rotation des roues d'un même essieu suivant un sens de rotation opposé. Les roues d'un même essieu sont donc des roues contrarotatives entraînées en rotation suivant une direction opposée et les axes de rotation des roues forment entre eux un angle égal à 90° à plus ou moins 20° près.

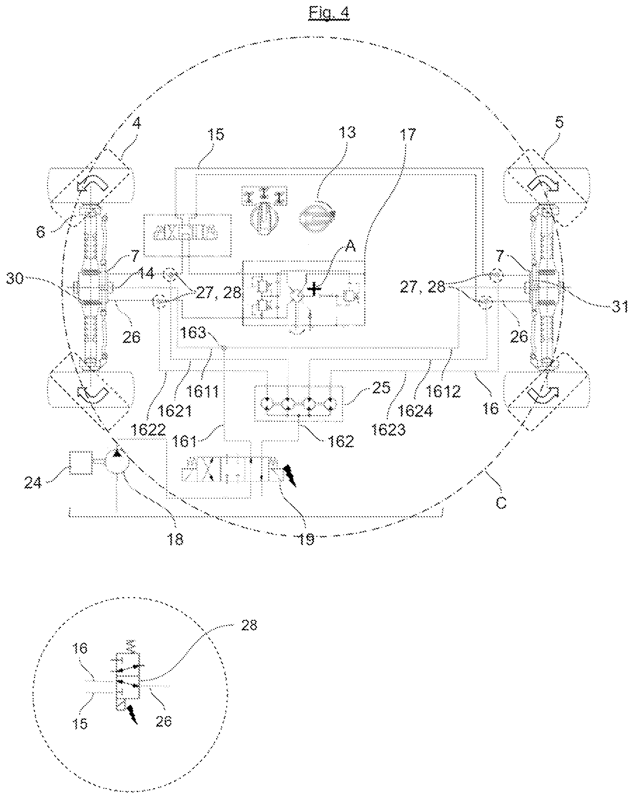

Cette deuxième configuration ou configuration en "O" des roues est illustrée par les roues en pointillés à la figure 4.

En d'autres termes, dans cette deuxième configuration de l'engin 1, les roues avant sont en position de pincement et les roues arrière sont en position d'ouverture. Dans cette deuxième configuration, les roues d'un même essieu contrarotatives sont destinées à tourner suivant des directions opposées.

Dans la première configuration, la chambre 11 centrale de chaque vérin 7 est à l'état non alimenté en fluide. Dans la première configuration, les chambres d'extrémité du vérin 7 de l'essieu 2 moto-directeur avant forment indifféremment l'une, une chambre d'admission de fluide, l'autre, une chambre d'échappement de fluide. Il en est de même pour le vérin 7 de l'essieu 3 moto-directeur arrière lorsque les quatre roues sont directrices dans cette première configuration.

Dans la première configuration, seules les chambres 121 et 122 d'extrémité des vérins 7 peuvent être alimentées en fluide, de sorte que pour un même essieu, lorsque l'une des chambres d'extrémité du vérin 7 du mécanisme 6 de direction de l'essieu forme une chambre d'admission de fluide, l'autre chambre d'extrémité forme une chambre d'échappement de fluide.

Comme l'illustrent les symboles de la figure 3, il peut donc exister, dans la première configuration, différentes possibilités, à savoir par exemple :
- un fonctionnement avec quatre roues directrices parallèles entre elles par paire. Dans ce cas, les chambres d'extrémité des vérins des deux essieux sont aptes à être alimentées en fluide avec une alimentation telle que lorsque les roues avant parallèles entre elles tournent à droite, les roues arrière parallèles entre elles tournent à gauche et inversement.
- un fonctionnement avec deux roues directrices, dans ce cas les chambres d'extrémité du vérin de l'essieu avant sont aptes à être alimentées en fluide, le vérin de l'essieu arrière n'est pas alimenté en fluide.
- un fonctionnement dit en crabe avec quatre roues directrices parallèles entre elles. Dans ce cas à nouveau, les chambres d'extrémité des vérins des deux essieux sont aptes à être alimentées en fluide.

Dans cette première configuration où la chambre 11 centrale de chaque vérin 7 est à l'état non alimenté en fluide, les pistons 91 et 92 d'un même vérin 7 sont solidaires en déplacement. Ainsi, dans cette première configuration, le vérin 7 de chaque mécanisme 6 de direction forme l'équivalent d'un vérin à un piston et deux tiges. Pour cette raison, dans cette première configuration, à l'état alimenté en fluide d'un vérin 7, les chambres 121 et 122 d'extrémité du vérin 7 forment, l'une, une chambre d'admission de fluide, l'autre, une chambre d'échappement de fluide.

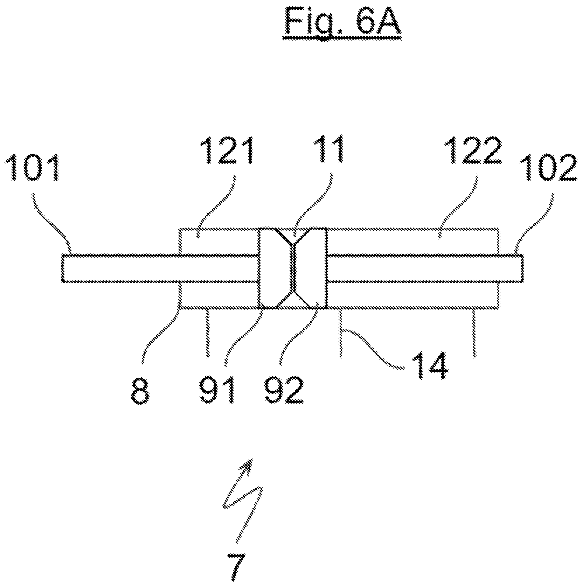

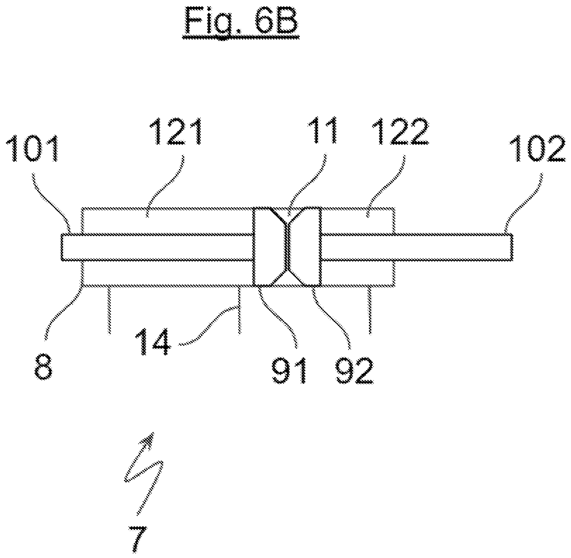

Ainsi, par exemple, comme illustré aux figures 6A et 6B, si on suppose que le vérin 7 représenté est celui du mécanisme 6 de direction de l'essieu avant, lorsque la chambre 122 d'extrémité qui forme la chambre d'admission est alimentée en fluide, la tige 102 du piston 92 rentre dans le corps 8 du vérin 7, tandis que la tige 101 du piston 91 sort du corps 8 du vérin 7, la chambre d'extrémité 121 constituant la chambre d'échappement de fluide, ce qui a pour conséquence une rotation vers la droite des roues avant.

A l'inverse, dans la figure 6B, lorsque la chambre 121 d'extrémité qui forme la chambre d'admission est alimentée en fluide, la tige 101 du piston 91 rentre dans le corps 8 du vérin 7, tandis que la tige 102 du piston 92 sort du corps 8 du vérin, la chambre 122 d'extrémité formant la chambre d'échappement, ce qui a pour conséquence une rotation vers la gauche des roues avant.

En position droite des roues, c'est-à-dire lorsque les roues avant s'étendent parallèlement à l'axe longitudinal de l'engin pris suivant la direction avant/arrière, les pistons 91 et 92 du vérin 7 sont dans la zone médiane du corps 8 pris par référence aux extrémités du corps 8.

Pour permettre un fonctionnement des vérins 7 des mécanismes 6 de direction dans la première configuration, un raccordement en fluide des vérins 7 des mécanismes de direction à la ou l'une des sources de fluide sous pression est nécessaire. A cet effet, l'engin 1 comprend un premier circuit 15 de fluide. Ce premier circuit 15 de fluide est actif, c'est-à-dire sollicité dans la première configuration. A l'état sollicité, ce premier circuit est alimenté en fluide sous pression.

Dans les exemples représentés, ce premier circuit 15 de fluide est raccordé à une source de fluide représentée en 17 aux figures. Ce premier circuit 15 comprend, au niveau de la source 17 de fluide de manière en soi connue, un boîtier de direction, tel qu'un dispositif de servo-commande hydrostatique encore connu sous le nom d'Orbitrol (marque déposée). Ce boîtier de direction peut comprendre une pompe et un distributeur rotatif en prise avec un organe de commande de direction, tel que le volant 33 de l'engin.

L'entraînement en rotation du volant 33 génère un actionnement de la pompe et du distributeur rotatif pour une alimentation du premier circuit 15 de fluide. Ce premier circuit 15 de fluide comprend, sur au moins une partie de son trajet, un distributeur multi-positions qui permet soit l'alimentation exclusivement de l'une ou l'autre des chambres d'extrémité du vérin 7 de l'essieu avant dans le cas d'une première configuration avec deux roues avant directrices, soit l'alimentation de l'une ou l'autre des chambres d'extrémité du vérin 7 de l'essieu avant et de l'une ou l'autre des chambres d'extrémité du vérin 7 de l'essieu arrière pour obtenir les différentes possibilités de fonctionnement en termes de roues directrices décrites ci-dessus, à savoir quatre roues directrices parallèles par paire ou quatre roues directrices parallèles (en crabe).

Ce premier circuit 15 de fluide ne sera pas décrit plus en détail car il correspond à un fonctionnement classique de la direction d'un tel engin.

Il doit être noté que dans la première configuration, les pistons 91 et 92 d'un même vérin 7 sont solidaires en déplacement par simple contact d'appui l'un contre l'autre. Ainsi, à chaque fois qu'une chambre d'extrémité d'un vérin est alimentée en fluide, le piston servant à la délimitation de ladite chambre d'extrémité fait office de pousseur du piston servant à la délimitation de l'autre chambre d'extrémité.

Dans la deuxième configuration, la chambre 11 centrale du vérin 7 de chaque mécanisme de direction est apte à être alimentée en fluide. A cet effet, le corps 8 de chaque vérin 7 comprend, pour une alimentation en fluide de la chambre 11 centrale dudit vérin 7, une ouverture 14 ménagée dans la zone médiane du corps 8 prise par référence aux deux extrémités du corps 8. Au moins une partie de cette ouverture 14, ménagée dans la zone médiane du corps 8 de chaque vérin 7, s'étend à équidistance des extrémités du corps 8.

Le corps 8 de chaque vérin 7 comprend bien évidemment également au niveau de chaque extrémité du corps une ouverture pour l'alimentation en fluide d'une chambre d'extrémité du vérin 7.

L'engin 1 comprend un deuxième circuit 16 de fluide sollicité dans la deuxième configuration. Ce deuxième circuit 16 de fluide actif dans la deuxième configuration est relié à une source de fluide sous pression représentée en 18 aux figures. Ce deuxième circuit 16 de fluide est, pour le vérin 7 de chaque mécanisme 6 de direction, configuré de sorte que lorsque la chambre 11 centrale du vérin 7 forme une chambre d'admission, les chambres d'extrémité 121 et 122 dudit vérin 7 forment des chambres d'échappement et inversement.

Ainsi, lorsque la chambre 11 centrale de chaque vérin 7 est alimentée en fluide et forme la chambre d'admission et que les chambres d'extrémité de chaque vérin 7 forment les chambres d'échappement, les roues 4 avant et 5 arrière de l'engin 1 sont amenées dans la deuxième configuration en "O". A l'inverse, lorsque la chambre 11 centrale de chaque vérin 7 forme la chambre d'échappement et que les chambres 121 et 122 d'extrémité de chaque vérin 7 forment les chambres d'alimentation en fluide, les roues passent de la deuxième configuration en "O" à la première configuration dans laquelle les roues d'un même essieu s'étendent parallèlement à elles-mêmes.

En position de fin de course des roues, lors du passage de la deuxième configuration à la première configuration, les roues s'étendent parallèlement à l'axe longitudinal de l'engin pris suivant la direction avant/arrière. Dans cette position des roues dite position droite des roues, les pistons 91 et 92 d'un vérin 7 s'étendent dans la zone médiane du corps 8 du vérin. Cette zone médiane est prise par référence aux extrémités du corps 8 du vérin 7.

Pour garantir un retour des pistons 91 et 92 d'un même vérin 7 dans la position médiane, le deuxième circuit 16 de fluide est équipé d'un diviseur 25 de débit pour permettre une alimentation à un même débit de chaque chambre d'extrémité 121 ou 122 du vérin 7.

Dans les exemples représentés, le diviseur 25 de débit du deuxième circuit 16 de fluide qui est, de préférence, un diviseur 25 de débit à engrenages est interposé entre la source 18 de pression du deuxième circuit 16 de fluide et les chambres d'extrémité 121 et 122 des vérins 7.

La source 18 de pression du deuxième circuit 16 de fluide est ici formé par une pompe hydraulique entraînée par un moteur 24. Ce moteur 24 peut être un moteur électrique ou thermique.

Le deuxième circuit 16 comprend une première portion 161 de circuit entre la source 18 de fluide sous pression du deuxième circuit 16 et la chambre 11 centrale de chaque vérin 7 et une deuxième portion 162 de circuit s'étendant entre la source 18 de fluide sous pression du deuxième circuit et chaque chambre d'extrémité 121, 122 de chaque vérin 7. La première portion 161 de circuit se développe depuis la source 18 de fluide sous pression du deuxième circuit 16 vers un nœud 163 de raccordement au niveau duquel ladite première portion 161 de circuit se divise en deux tronçons 1611, 1612 reliant l'un le nœud 163 de raccordement à la chambre 11 centrale de l'un des vérins 7, l'autre, le nœud 163 de raccordement à la chambre 11 centrale de l'autre vérin 7. La deuxième portion 162 de circuit se divise au niveau du diviseur 25 de débit en quatre tronçons 1621, 1622, 1623, 1624 reliant chacun le diviseur 25 de débit à une chambre d'extrémité 121, 122 d'un vérin 7 distincte d'un tronçon à un autre. Ce deuxième circuit est visible, par exemple, à la figure 3.

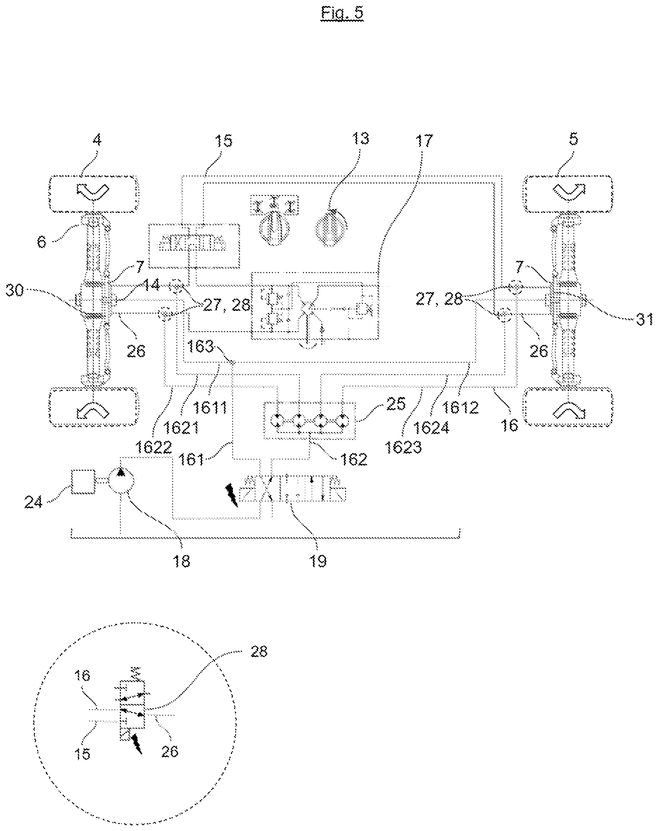

Le deuxième circuit 16 de fluide est équipé d'un distributeur 19 à au moins trois positions interposé entre la source 18 de fluide sous pression du deuxième circuit 16 de fluide et les vérins 7. La première position du distributeur 19 dans laquelle aucune chambre des vérins 7 n'est alimentée par ledit deuxième circuit 16 de fluide correspond à l'état positionné du sélecteur 13 sur la première configuration (figure 3). La deuxième position du distributeur 19 dans laquelle la chambre 11 centrale de chaque vérin 7 est une chambre d'alimentation en fluide et les chambres d'extrémité 121, 122 sont des chambres d'échappement correspond au moins à l'état positionné du sélecteur 13 sur la deuxième configuration (figure 4), et la troisième position du distributeur 19 dans laquelle la chambre 11 centrale est une chambre d'échappement et les chambres d'extrémité 121, 122 sont des chambres d'alimentation en fluide correspond à l'état entraîné en déplacement du sélecteur 13 pour le passage de la deuxième à la première configuration (figure 5).

Le distributeur 19 à au moins trois positions est un distributeur 4/3. Ce distributeur 19 est rappelé par ressort dans la première position dans laquelle aucune chambre des vérins n'est alimentée par le deuxième circuit 16 de fluide.

Ce distributeur 19 à trois positions peut être alimenté par un premier signal électrique pour le passage en deuxième position et par un second signal électrique pour le passage en troisième position.

A chaque fois, l'absence de signal électrique permet un rappel du distributeur 19 à trois positions en première position.

Les premier et deuxième circuits de fluide peuvent être indépendants. En variante, et comme dans l'exemple représenté, les premier et deuxième circuits 15, 16 de fluide comprennent chacun au moins une portion de circuit individuelle et une portion 26 de circuit commune avec l'autre circuit, la ou au moins l'une des portions 26 communes aux premier et deuxième circuits 15, 16 est disposée entre l'une des chambres d'extrémité 121, 122 d'un vérin 7 et un nœud 27 de liaison muni d'un organe 28 de commutation. Ledit organe 28 de commutation est monté mobile entre une première position dans laquelle la portion 26 commune est en communication fluidique avec une portion individuelle du premier circuit 15 (figure 3) et une deuxième position dans laquelle la portion 26 commune est en communication fluidique avec une portion individuelle du deuxième circuit 16 (figures 4 et 5) et la première position de l'organe 28 de commutation correspond à l'état positionné du sélecteur 13 sur la première configuration, et la deuxième position de l'organe 28 de commutation à l'état positionné du sélecteur 13 sur la deuxième configuration.

Dans l'exemple représenté, cet organe 28 de commutation est un distributeur à deux positions, c'est-à-dire une électrovanne 3/2 avec une des positions correspondant à la position prise par le distributeur ou l'électrovanne dans la première configuration et l'autre des positions correspondant à la position prise par le distributeur ou l'électrovanne dans la deuxième configuration.

Ce distributeur ou électrovanne est rappelé par ressort dans la position correspondant à la première configuration et est alimenté en électricité pour le passage dans la position correspondant à la deuxième configuration.

L'engin 1 comprend encore une unité 292 de commande. Ladite unité 292 de commande se présente sous la forme d'un système électronique et informatique qui comprend par exemple un microprocesseur et une mémoire de travail. Selon un aspect particulier, l'unité de pilotage peut se présenter sous la forme d'un automate programmable. Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application). Il est aussi possible de combiner des parties informatiques et des parties électroniques. Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

L'unité 292 de commande est configurée pour acquérir des données de position du sélecteur 13 et pour commander les organes 28 de commutation en fonction desdites données. Ainsi, chaque organe 28 de commutation, tel que décrit ci-dessus, est alimenté ou non en électricité en fonction de la position du sélecteur 13.

Enfin, pour parfaire l'engin 1, ce dernier comprend un premier dispositif 30 de détection d'au moins un paramètre représentatif de la position dite droite des roues 4 avant et un deuxième dispositif 31 de détection d'au moins un paramètre représentatif de la position dite droite des roues 5 arrière, étant rappelé que la position droite des roues 4 avant, ou respectivement 5, arrière correspond à une position dans laquelle les roues 4 avant, ou respectivement 5 arrière, sont parallèles entre elles et à un axe longitudinal de l'engin pris suivant la direction avant/arrière de l'engin 1.

Ces premier et deuxième dispositifs de détection sont de même nature et peuvent affecter un grand nombre de formes. Ainsi, ci-après, un seul dispositif de détection sera décrit.

Le premier dispositif 30 de détection peut donc être un capteur de position qui détecte un anneau foncé disposé sur la tige 101 du vérin 7. Chaque vérin 7 est équipé d'un tel anneau et d'un capteur optique associé. Lorsque le premier dispositif 30 de détection détecte à l'avant et le deuxième dispositif 31 de détection détecte à l'arrière l'anneau foncé, les roues sont disposées en position droite et un voyant 21 peut être allumé dans le poste de conduite de l'engin pour informer le conducteur de l'engin.

L'engin 1 comprend une unité 291 de commande configurée pour autoriser l'actionnement du sélecteur 13 et son passage de la position correspondant à la première configuration à la position correspondant à la deuxième configuration uniquement en position droite des roues 4 avant et 5 arrière de l'engin 1.

Il doit être noté que cette unité 291 de commande et l'unité 292 de commande décrites ci-dessus sont similaires et peuvent être réalisées par une seule et même unité de commande.

En pratique, le fonctionnement de l'engin 1 est tel que suit.

On suppose que les roues de l'engin 1 sont dans la première configuration comme illustré à la figure 3. Dans cette première configuration, le distributeur 19 à trois positions du deuxième circuit 16 de fluide est dans une position dans laquelle aucune chambre de vérin 7 n'est alimentée par la source 18 de fluide sous pression du deuxième circuit 16 de fluide. Les organes 28 de commutation sont dans la première position dans laquelle la portion de circuit commune 26, est en communication fluidique avec une portion individuelle du premier circuit 15.

Dans cette première configuration, l'engin 1 peut fonctionner avec deux roues directrices, quatre roues directrices ou en crabe en fonction de la position du distributeur disposé sur ce premier circuit 15 de fluide, étant entendu qu'à chaque fois les roues d'un même essieu sont parallèles entre elles.

Lorsque le conducteur de l'engin souhaite que les roues avant et arrière de l'engin soient disposées dans la deuxième configuration, c'est-à-dire en "O" comme illustré par les roues en pointillés de la figure 4, le conducteur s'assure d'abord que l'organe de commande marche avant/marche arrière/neutre 22, tel qu'un levier de commande encore appelé joystick de l'engin, est en position neutre, que l'engin est à l'arrêt, c'est-à-dire que le frein à main est serré et que les roues sont alignées en position droite ce qui peut être constaté grâce au premier dispositif 30 de détection et au deuxième dispositif 31 de détection, l'éclairage d'un voyant 21 lumineux étant assuré lorsque la position droite est atteinte.

Le conducteur peut alors actionner le sélecteur 13 pour le passage en deuxième configuration. La ou les unités de commande de l'engin pilotent alors simultanément le distributeur 19 à trois positions et les organes 28 de commutation pour permettre l'alimentation de la chambre 11 centrale des vérins 7 en fluide via le deuxième circuit 16 de fluide à partir de la source 18 de fluide.

Le conducteur de l'engin 1 accélère, via la pédale 23 d'accélérateur de l'engin, le moteur 24 pour actionner la pompe constitutive de la source 18 de fluide sous pression du deuxième circuit 16 de fluide et les roues prennent la position en "O" de la figure 4.

Dans cette deuxième configuration l'engin 1 peut tourner sur lui-même à l'état entraîné en rotation d'au moins une des roues de l'engin.

Lorsque le conducteur de l'engin souhaite que les roues reviennent dans la première configuration, il amène de nouveau l'organe de commande marche avant/marche arrière/neutre 22 de l'engin en position neutre, actionne le frein à main pour garantir une vitesse nulle de l'engin.

Il actionne ensuite le sélecteur 13 pour le ramener dans la première configuration, ce qui a pour conséquence de déplacer ledit distributeur 19 à trois positions dans une position dans laquelle la chambre centrale forme la chambre d'échappement et les chambres d'extrémité forment les chambres d'admission du fluide de chaque vérin 7 (figure 5).

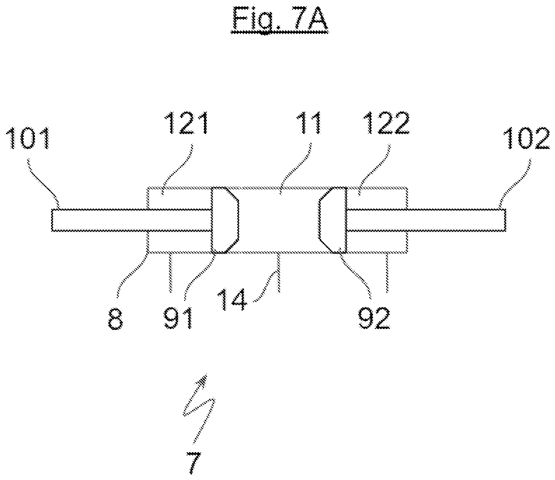

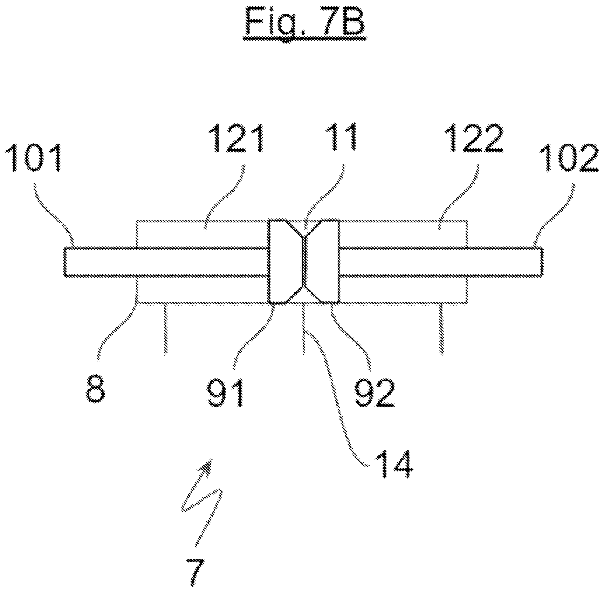

Grâce au diviseur 25 de débit équipant le deuxième circuit 16 de fluide, les chambres d'extrémité sont toutes alimentées avec un même débit garantissant le retour des pistons des vérins en zone médiane tel que représenté à la figure 7B.

L'unité de commande commande alors l'arrêt de l'alimentation en électrique du distributeur 19 à trois positions et des organes 28 de commande qui sous l'effet des ressorts les équipant sont rappelés automatiquement dans la position correspondant à la première configuration (figure 3).

Un fonctionnement de l'engin dans la première configuration peut alors de nouveau être réalisé.

## Revendications

1. Engin (1) automoteur, notamment un engin automoteur de manutention de charge, ledit engin (1) comprenant un essieu (2) moto-directeur avant avec deux roues (4) avant et un essieu (3) moto-directeur arrière avec deux roues (5) arrière, chaque essieu (2, 3) étant équipé d'un mécanisme (6) de direction, chaque mécanisme (6) de direction comprenant un vérin (7) hydraulique double effet raccordable à une source (17, 18) de fluide sous pression, ledit vérin (7) comprenant un corps (8) allongé depuis une extrémité en direction de l'autre extrémité dudit corps et deux pistons (91, 92), associés chacun à une tige (101, 102) de sortie de commande directionnelle d'une roue de l'essieu, lesdits pistons (91, 92) divisant le corps (8) en une chambre (11) dite centrale s'étendant entre les pistons (91, 92) et deux chambres (121, 122) d'extrémité disposées chacune côté tige (101 ; 102), ledit engin (1) comprenant deux configurations et un sélecteur de l'une ou l'autre configurations, la première configuration dite normale correspondant à une configuration dans laquelle les roues (4, 5) d'un même essieu (2, 3) s'étendent dans des plans sensiblement parallèles, la deuxième configuration dite en « O » correspondant à une configuration dans laquelle les roues (4, 5) de l'engin sont disposées sur un cercle (C) de centre passant par un axe (A) dit vertical, pour une rotation de l'engin (1) sur lui-même autour dudit axe (A), la chambre (11) centrale de chaque vérin (7) étant à l'état non alimenté en fluide dans la première configuration de sorte que dans cette première configuration, le vérin (7) de chaque mécanisme (6) de direction forme l'équivalent d'un vérin à un piston et deux tiges, la chambre (11) centrale étant dans la deuxième configuration, apte à être alimentée en fluide, **caractérisé en ce que** l'engin (1) comprend pour un raccordement en fluide des vérins (7) des mécanismes (6) de direction à la ou les sources (17,18) de fluide sous pression, un premier et un deuxième circuits (15, 16) de fluide, le premier circuit (15) de fluide étant un circuit actif dans la première configuration, le deuxième circuit (16) de fluide étant un circuit actif dans la deuxième configuration, le deuxième circuit (16) de fluide étant, pour le vérin (7) de chaque mécanisme (6) de direction, configuré de sorte que lorsque la chambre (11) centrale dudit vérin forme une chambre d'admission, les chambres (121, 122) d'extrémité dudit vérin forment des chambres d'échappement, et inversement, ce deuxième circuit (16) de fluide étant équipé d'un diviseur de débit (25) pour permettre une alimentation à un même débit de fluide de chaque chambre d'extrémité (121, 122).

2. Engin (1) automoteur selon la revendication 1, **caractérisé en ce que** le diviseur (25) de débit du deuxième circuit (16) de fluide, qui est de préférence un diviseur (25) de débit à engrenages, est interposé entre la source (18) de pression du deuxième circuit (16) de fluide et les chambres (121, 122) d'extrémité des vérins (7).

3. Engin (1) automoteur selon la revendication 1, **caractérisé en ce que** le deuxième circuit (16) comprend une première portion (161) de circuit entre la source (18) de fluide sous pression du deuxième circuit (16) et la chambre (11) centrale de chaque vérin (7) et une deuxième portion (162) de circuit s'étendant entre la source (18) de fluide sous pression du deuxième circuit (16) et chaque chambre d'extrémité (121, 122) de chaque vérin (7), **en ce que** la première portion (161) de circuit se développe depuis la source (18) de fluide sous pression du deuxième circuit (16) vers un nœud (163) de raccordement au niveau duquel ladite première portion (161) de circuit se divise en deux tronçons (1611, 1612) reliant l'un le nœud (163) de raccordement à la chambre (11) centrale de l'un des vérins (7), l'autre le nœud (163) de raccordement à la chambre (11) centrale de l'autre vérin (7), et **en ce que** la deuxième portion (162) de circuit se divise au niveau du diviseur (25) de débit en quatre tronçons (1621, 1622, 1623, 1624) reliant chacun le diviseur (25) de débit à une chambre d'extrémité (121, 122) d'un vérin (7) distincte d'un tronçon à un autre.

4. Engin (1) automoteur selon la revendication 1, **caractérisé en ce que** le deuxième circuit (16) de fluide est équipé d'un distributeur (19) à au moins trois positions interposé entre la source (18) de fluide sous pression du deuxième circuit (16) de fluide et les vérins (7), **en ce que** la première position du distributeur (19) dans laquelle aucune chambre des vérins (7) n'est alimentée par ledit deuxième circuit (16) de fluide correspond à l'état positionné du sélecteur (13) sur la première configuration, **en ce que** la deuxième position du distributeur (19) dans laquelle la chambre (11) centrale de chaque vérin (7) est une chambre d'alimentation en fluide et les chambres d'extrémité (121, 122) sont des chambres d'échappement correspond au moins à l'état positionné du sélecteur (13) sur la deuxième configuration, et **en ce que** la troisième position du distributeur (19) dans laquelle la chambre (11) centrale est une chambre d'échappement et les chambres d'extrémité (121, 122) sont des chambres d'alimentation en fluide correspond à l'état entraîné en déplacement du sélecteur (13) pour le passage de la deuxième à la première configuration.

5. Engin (1) automoteur selon la revendication 1, **caractérisé en ce que** les premier et deuxième circuits (15, 16) de fluide comprennent chacun au moins une portion de circuit individuelle et une portion (26) de circuit commune avec l'autre circuit, **en ce que** la ou au moins l'une des portions (26) communes aux premier et deuxième circuits (15, 16) est disposée entre l'une des chambres d'extrémité (121, 122) d'un vérin (7) et un nœud (27) de liaison muni d'un organe (28) de commutation, **en ce que** ledit organe (28) de commutation est monté mobile entre une première position dans laquelle la portion (26) commune est en communication fluidique avec une portion individuelle du premier circuit (15) et une deuxième position dans laquelle la portion (26) commune est en communication fluidique avec une portion individuelle du deuxième circuit (16) et **en ce que** la première position de l'organe (28) de commutation correspond à l'état positionné du sélecteur (13) sur la première configuration, et la deuxième position de l'organe (28) de commutation à l'état positionné du sélecteur sur la deuxième configuration.

6. Engin (1) automoteur selon la revendication 5, **caractérisé en ce que** l'engin (1) comprend une unité (292) de commande du ou de chaque organe (28) de commutation, ladite unité (292) de commande étant configurée pour acquérir des données de position du sélecteur (13) et pour commander les organes (28) de commutation en fonction desdites données.

7. Engin automoteur selon la revendication 1, **caractérisé en ce que** le corps de chaque vérin comprend, pour une alimentation en fluide de la chambre centrale dudit vérin, une ouverture ménagée dans la zone médiane dudit corps prise par référence aux deux extrémités dudit corps.

8. Engin automoteur selon la revendication 7, **caractérisé en ce qu'**au moins une partie de l'ouverture ménagée dans la zone médiane du corps de chaque vérin prise par référence aux deux extrémités dudit corps s'étend à équidistance des extrémités dudit corps.

9. Engin automoteur selon l'une des revendications 7 ou 8, **caractérisé en ce que**, dans la première configuration, les pistons d'un même vérin sont solidaires en déplacement par simple contact d'appui l'un contre l'autre.

10. Engin automoteur selon la revendication 1, **caractérisé en ce qu'**il comprend un premier dispositif de détection d'au moins un paramètre représentatif de la position dite droite des roues avant et un deuxième dispositif de détection d'au moins un paramètre représentatif de la position dite droite des roues arrière, **en ce que** la position droite des roues avant ou respectivement arrière correspond à une position dans laquelle les roues avant ou respectivement arrière sont parallèles entre elles et à l'axe longitudinal de l'engin pris suivant la direction avant/arrière de l'engin, et **en ce que** l'engin comprend une unité de commande configurée pour autoriser l'actionnement du sélecteur et son passage de la position correspondant à la première configuration à la position correspondant à la deuxième configuration uniquement en position droite des roues avant et arrière.

## Patentansprüche

1. Selbstfahrende Maschine (1), insbesondere selbstfahrende Lasthandhabungsmaschine, wobei die Maschine (1) eine vordere Antriebs- und Lenkachse (2) mit zwei Vorderrädern (4) und eine hintere Antriebs- und Lenkachse (3) mit zwei Hinterrädern (5) umfasst, wobei jede Achse (2, 3) mit einem Lenkmechanismus (6) ausgestattet ist, wobei jeder Lenkmechanismus (6) einen doppeltwirkenden Hydraulikzylinder (7) umfasst, der an eine Druckfluidquelle (17, 18) anschließbar ist, wobei der Zylinder (7) ein Gehäuse (8), das länglich von einem Ende in Richtung des anderen Endes dieses Gehäuses ist, und zwei Kolben (91, 92), die jeweils einer austretenden Stange (101, 102) zur Richtungssteuerung eines Rades der Achse zugeordnet sind, umfasst, wobei die Kolben (91, 92) das Gehäuse (8) in eine sogenannte zentrale Kammer (11), die sich zwischen den Kolben (91, 92) erstreckt, und zwei Endkammern (121, 122), die jeweils auf der Seite einer Stange (101; 102) angeordnet sind, aufteilen, wobei die Maschine (1) zwei Konfigurationen und einen Selektor für die eine oder andere Konfiguration umfasst, wobei die erste, sogenannte normale Konfiguration einer Konfiguration entspricht, in der sich die Räder (4, 5) derselben Achse (2, 3) in Ebenen erstrecken, die im Wesentlichen parallel sind, und die zweite, sogenannte "O"-Konfiguration einer Konfiguration entspricht, in der die Räder (4, 5) der Maschine auf einem Kreis (C) mit einem Mittelpunkt angeordnet sind, der auf einer sogenannten vertikalen Achse (A) liegt, für eine Drehung der Maschine (1) um sich selbst um diese Achse (A), wobei die zentrale Kammer (11) jedes Zylinders (7) sich in der ersten Konfiguration im nicht mit Fluid versorgten Zustand befindet, so dass in dieser ersten Konfiguration der Zylinder (7) jedes Lenkmechanismus (6) das Äquivalent eines Zylinders mit einem Kolben und zwei Stangen bildet, wobei die zentrale Kammer (11), wenn sie sich in der zweiten Konfiguration befindet, mit Fluid versorgt werden kann, **dadurch gekennzeichnet, dass** die Maschine (1) für einen Fluidanschluss der Zylinder (7) der Lenkmechanismen (6) an die Druckfluidquelle oder -quellen (17, 18) einen ersten und einen zweiten Fluidkreislauf (15, 16) umfasst, wobei der erste Fluidkreislauf (15) in der ersten Konfiguration ein aktiver Kreislauf ist, der zweite Fluidkreislauf (16) in der zweiten Konfiguration ein aktiver Kreislauf ist, der zweite Fluidkreislauf (16) für den Zylinder (7) jedes Lenkmechanismus (6) so ausgebildet ist, dass, wenn die zentrale Kammer (11) dieses Zylinders eine Einlasskammer bildet, die Endkammern (121, 122) dieses Zylinders Auslasskammern bilden, und umgekehrt, und dieser zweite Fluidkreislauf (16) mit einem Stromteiler (25) ausgestattet ist, um eine Versorgung jeder Endkammer (121, 122) mit ein und demselben Fluiddurchsatz zu ermöglichen.

2. Selbstfahrende Maschine (1) nach Anspruch 1, **dadurch gekennzeichnet, dass** der Stromteiler (25) des zweiten Fluidkreislaufs (16), der vorzugsweise ein Zahnradstromteiler (25) ist, zwischen der Druckquelle (18) des zweiten Fluidkreislaufs (16) und den Endkammern (121, 122) der Zylinder (7) angeordnet ist.

3. Selbstfahrende Maschine (1) nach Anspruch 1, **dadurch gekennzeichnet, dass** der zweite Kreislauf (16) einen ersten Kreislaufabschnitt (161) zwischen der Druckfluidquelle (18) des zweiten Kreislaufs (16) und der zentralen Kammer (11) jedes Zylinders (7) und einen zweiten Kreislaufabschnitt (162), der sich zwischen der Druckfluidquelle (18) des zweiten Kreislaufs (16) und jeder Endkammer (121, 122) jedes Zylinders (7) erstreckt, umfasst, dadurch, dass der erste Kreislaufabschnitt (161) sich von der Druckfluidquelle (18) des zweiten Kreislaufs (16) zu einem Anschlussknotenpunkt (163) erstreckt, an dem sich der erste Kreislaufabschnitt (161) in zwei Teilabschnitte (1611, 1612) aufteilt, wobei der eine den Anschlussknotenpunkt (163) mit der zentralen Kammer (11) eines der Zylinder (7) und der andere den Anschlussknotenpunkt (163) mit der zentralen Kammer (11) des anderen Zylinders (7) verbindet, und dadurch, dass der zweite Kreislaufabschnitt (162) sich an dem Stromteiler (25) in vier Teilabschnitte (1621, 1622, 1623, 1624) aufteilt, die jeweils den Stromteiler (25) mit einer Endkammer (121, 122) eines Zylinders (7) verbinden, die für jeden Teilabschnitt eine andere ist.

4. Selbstfahrende Maschine (1) nach Anspruch 1, **dadurch gekennzeichnet, dass** der zweite Fluidkreislauf (16) mit einem Verteiler (19) mit mindestens drei Positionen ausgestattet ist, der zwischen der Druckfluidquelle (18) des zweiten Fluidkreislaufs (16) und den Zylindern (7) angeordnet ist, dadurch, dass die erste Position des Verteilers (19), in der keine Kammer der Zylinder (7) durch den zweiten Fluidkreislauf (16) versorgt wird, dem positionierten Zustand des Selektors (13) auf der ersten Konfiguration entspricht, dadurch, dass die zweite Position des Verteilers (19), in der die zentrale Kammer (11) jedes Zylinders (7) eine Fluidversorgungskammer ist und die Endkammern (121, 122) Auslasskammern sind, wenigstens dem positionierten Zustand des Selektors (13) auf der zweiten Konfiguration entspricht, und dadurch, dass die dritte Position des Verteilers (19), in der die zentrale Kammer (11) eine Auslasskammer ist und die Endkammern (121, 122) Fluidversorgungskammern sind, dem in Bewegung versetzten Zustand des Selektors (13) für den Übergang aus der zweiten in die erste Konfiguration entspricht.

5. Selbstfahrende Maschine (1) nach Anspruch 1, **dadurch gekennzeichnet, dass** der erste und der zweite Fluidkreislauf (15, 16) jeweils mindestens einen unabhängigen Kreislaufabschnitt und einen mit dem anderen Kreislauf gemeinsamen Kreislaufabschnitt (26) umfassen, dadurch, dass der oder mindestens einer der Abschnitte (26), die dem ersten und zweiten Kreislauf (15, 16) gemeinsam sind, zwischen einer der Endkammern (121, 122) eines Zylinders (7) und einem mit einem Schaltorgan (28) ausgestatteten Verbindungsknotenpunkt (27) angeordnet ist, dadurch, dass das Schaltorgan (28) beweglich angebracht ist zwischen einer ersten Position, in welcher der gemeinsame Abschnitt (26) in Fluidverbindung mit einem unabhängigen Abschnitt des ersten Kreislaufs (15) steht, und einer zweiten Position, in welcher der gemeinsame Abschnitt (26) in Fluidverbindung mit einem unabhängigen Abschnitt des zweiten Kreislaufs (16) steht, und dadurch, dass die erste Position des Schaltorgans (28) dem positionierten Zustand des Selektors (13) auf der ersten Konfiguration und die zweite Position des Schaltorgans (28) dem positionierten Zustand des Selektors auf der zweiten Konfiguration entspricht.

6. Selbstfahrende Maschine (1) nach Anspruch 5, **dadurch gekennzeichnet, dass** die Maschine (1) eine Steuereinheit (292) für das oder jedes Schaltorgan (28) umfasst, wobei die Steuereinheit (292) dafür ausgelegt ist, Positionsdaten des Selektors (13) zu erfassen und die Schaltorgane (28) in Abhängigkeit von diesen Daten zu steuern.

7. Selbstfahrende Maschine nach Anspruch 1, **dadurch gekennzeichnet, dass** das Gehäuse jedes Zylinders für eine Versorgung der zentralen Kammer dieses Zylinders mit Fluid eine Öffnung umfasst, die im mittleren Bereich des Gehäuses ausgebildet ist, bezogen auf die zwei Enden des Gehäuses.

8. Selbstfahrende Maschine nach Anspruch 7, **dadurch gekennzeichnet, dass** wenigstens ein Teil der Öffnung, die im mittleren Bereich des Gehäuses jedes Zylinders ausgebildet ist, bezogen auf die zwei Enden des Gehäuses, sich in gleichem Abstand von den Enden des Gehäuses erstreckt.

9. Selbstfahrende Maschine nach einem der Ansprüche 7 oder 8, **dadurch gekennzeichnet, dass** in der ersten Konfiguration die Kolben ein und desselben Zylinders durch einfache Anlage aneinander bewegungsfest verbunden sind.

10. Selbstfahrende Maschine nach Anspruch 1, **dadurch gekennzeichnet, dass** sie eine erste Vorrichtung zur Detektion mindestens eines Parameters umfasst, der für die sogenannte gerade Position der Vorderräder repräsentativ ist, und eine zweite Vorrichtung zur Detektion mindestens eines Parameters, der für die sogenannte gerade Position der Hinterräder repräsentativ ist, dadurch, dass die gerade Position der Vorder- bzw. Hinterräder einer Position entspricht, in der die Vorder- bzw. Hinterräder parallel zueinander und zur Längsachse der Maschine sind, entlang der Vorn-Hinten-Richtung der Maschine gesehen, und dadurch, dass die Maschine eine Steuereinheit umfasst, die dafür ausgelegt ist, die Betätigung des Selektors und dessen Übergang aus der der ersten Konfiguration entsprechenden Position in die der zweiten Konfiguration entsprechende Position nur in der geraden Position der Vorder- und Hinterräder zu erlauben.

## Claims

1. Self-propelled vehicle (1), notably a self-propelled load-handling vehicle, said vehicle (1) comprising a front driving and steering axle (2) with two front wheels (4) and a rear driving and steering axle (3) with two rear wheels (5), each axle (2, 3) being equipped with a steering mechanism (6), each steering mechanism (6) comprising a double-acting hydraulic cylinder (7) which can be connected to a pressurized-fluid source (17, 18), said cylinder (7) comprising a body (8) which is elongate from one end to the other end of said body and two pistons (91, 92), each associated with an output rod (101, 102) for directional control of one wheel of the axle, said pistons (91, 92) dividing the body (8) into a chamber (11), referred to as central chamber, extending between the pistons (91, 92) and two end chambers (121, 122) each disposed on a rod (101; 102) side, said vehicle (1) comprising two configurations and a selector for selecting one configuration or the other, the first configuration, referred to as normal configuration, corresponding to a configuration in which the wheels (4, 5) of one and the same axle (2, 3) extend in substantially parallel planes, the second configuration, referred to as "O" configuration, corresponding to a configuration in which the wheels (4, 5) of the vehicle are placed on a circle (C) of which the center passes through an axis (A) referred to as vertical axis, for a rotation of the vehicle (1) on itself about said axis (A), the central chamber (11) of each cylinder (7) not being supplied with fluid in the first configuration such that, in this first configuration, the cylinder (7) of each steering mechanism (6) forms the equivalent of a cylinder with a piston and two rods, the central chamber (11) being in the second configuration, in which it is able to be supplied with fluid, **characterized in that** the vehicle (1) comprises, to fluidically connect the cylinders (7) of the steering mechanisms (6) to the one or more pressurized-fluid sources (17, 18), a first and a second fluid circuit (15, 16), the first fluid circuit (15) being an active circuit in the first configuration, the second fluid circuit (16) being an active circuit in the second configuration, the second fluid circuit (16) being, for the cylinder (7) of each steering mechanism (6), configured such that, when the central chamber (11) of said cylinder forms an intake chamber, the end chambers (121, 122) of said cylinder form exhaust chambers, and vice versa, this second fluid circuit (16) being equipped with a flow splitter (25) for supplying each end chamber (121, 122) with fluid at the same flow rate.

2. Self-propelled vehicle (1) according to Claim 1, **characterized in that** the flow splitter (25) of the second fluid circuit (16), which is preferably a geared flow splitter (25), is interposed between the pressure source (18) of the second fluid circuit (16) and the end chambers (121, 122) of the cylinders (7).

3. Self-propelled vehicle (1) according to Claim 1, **characterized in that** the second circuit (16) comprises a first circuit portion (161) between the pressurized-fluid source (18) of the second circuit (16) and the central chamber (11) of each cylinder (7) and a second circuit portion (162) extending between the pressurized-fluid source (18) of the second circuit (16) and each end chamber (121, 122) of each cylinder (7), **in that** the first circuit portion (161) extends from the pressurized-fluid source (18) of the second circuit (16) to a connection node (163) where said first circuit portion (161) is divided into two sections (1611, 1612), one of which connects the connection node (163) to the central chamber (11) of one of the cylinders (7) and the other one of which connects the connection node (163) to the central chamber (11) of the other cylinder (7), and **in that** the second circuit portion (162) is divided at the flow splitter (25) into four sections (1621, 1622, 1623, 1624) each connecting the flow splitter (25) to an end chamber (121, 122) of a cylinder (7) that is distinct from one section to the next.

4. Self-propelled vehicle (1) according to Claim 1, **characterized in that** the second fluid circuit (16) is equipped with an at least three-position directional control valve (19) interposed between the pressurized-fluid source (18) of the second fluid circuit (16) and the cylinders (7), **in that** the first position of the directional control valve (19), in which no chamber of the cylinders (7) is supplied by said second fluid circuit (16), corresponds to the selector (13) being positioned in the first configuration, **in that** the second position of the directional control valve (19), in which the central chamber (11) of each cylinder (7) is a fluid supply chamber and the end chambers (121, 122) are exhaust chambers, corresponds at least to the selector (13) being positioned in the second configuration, and **in that** the third position of the directional control valve (19), in which the central chamber (11) is an exhaust chamber and the end chambers (121, 122) are fluid supply chambers, corresponds to the selector (13) being moved in order to change from the second to the first configuration.

5. Self-propelled vehicle (1) according to Claim 1, **characterized in that** the first and second fluid circuits (15, 16) each comprise at least one individual circuit portion and one circuit portion (26) shared with the other circuit, **in that** the or at least one of the portions (26) shared by the first and second circuits (15, 16) is placed between one of the end chambers (121, 122) of a cylinder (7) and a junction node (27) provided with a switching member (28), **in that** said switching member (28) is mounted movably between a first position, in which the shared portion (26) is in fluidic communication with an individual portion of the first circuit (15), and a second position, in which the shared portion (26) is in fluidic communication with an individual portion of the second circuit (16), and **in that** the first position of the switching member (28) corresponds to the selector (13) being positioned in the first configuration, and the second position of the switching member (28) corresponds to the selector being positioned in the second configuration.

6. Self-propelled vehicle (1) according to Claim 5, **characterized in that** the vehicle (1) comprises a control unit (292) for the or each switching member (28), said control unit (292) being configured to acquire data regarding the position of the selector (13) and to control the switching members (28) as a function of said data.

7. Self-propelled vehicle according to Claim 1, **characterized in that** the body of each cylinder comprises, to supply the central chamber of said cylinder with fluid, an opening formed in the median zone of said body considered with reference to the two ends of said body.

8. Self-propelled vehicle according to Claim 7, **characterized in that** at least part of the opening formed in the median zone of the body of each cylinder considered with reference to the two ends of said body extends equidistantly from the ends of said body.

9. Self-propelled vehicle according to either of Claims 7 and 8, **characterized in that**, in the first configuration, the pistons of one and the same cylinder move conjointly by simply making bearing contact against one another.

10. Self-propelled vehicle according to Claim 1, **characterized in that** it comprises a first detection device for detecting at least one parameter indicative of the position referred to as straight position of the front wheels and a second detection device for detecting at least one parameter indicative of the position referred to as straight position of the rear wheels, **in that** the straight position of the front or respectively rear wheels corresponds to a position in which the front or respectively rear wheels are parallel to one another and to the longitudinal axis of the vehicle considered along the front/rear direction of the vehicle, and **in that** the vehicle comprises a control unit configured to permit the actuation of the selector and allow it to change from the position corresponding to the first configuration to the position corresponding to the second configuration solely in the straight position of the front and rear wheels.
